# NEUE EUROPÄISCHE PATENTSCHRIFT

(11) **EP 1 342 597 B2**
(45) Veröffentlichungstag und Bekanntmachung des Hinweises auf die Entscheidung über den Einspruch: **28.11.2012**
(45) Hinweis auf die Patenterteilung: 21.02.2007
(21) Anmeldenummer: 03003896.2
(22) Anmeldetag: 21.02.2003
(51) Int. Cl.: B60G 21/055, B60G 17/052, B60G 17/056, B60G 17/015

(54) **Anordnung zur aktiven Rollstabilisierung eines Kraftfahrzeugs**
Assembly for active roll stabilisation of a motor vehicle
Ensemble pour la stabilisation active de roulis d'un véhicule automobile

(30) Priorität: 08.03.2002 DE 10210306
(43) Veröffentlichungstag der Anmeldung: 10.09.2003
(73) Patentinhaber: Volkswagen Aktiengesellschaft, 38440 Wolfsburg (DE)
(72) Erfinder: Ullrich, Manfred, Dr., 30982 Vardegötzen (DE); Dreyer, Wilhelm, Prof. Dr., 38259 Salzgitter (DE); Hoffmann, Günter, 38518 Gifhorn (DE); Oehlerking, Conrad, 38527 Meine (DE); Steinkopff, Karl-Heinz, 38518 Gifhorn (DE)
(74) Vertreter: Beck, Michael Rudolf

(56) Entgegenhaltungen:
- DE-A1- 2 060 025
- DE-A1- 3 119 445
- DE-A1- 3 934 287
- DE-A1- 4 319 162
- DE-A1- 19 949 234
- US-A- 4 660 853
- PATENT ABSTRACTS OF JAPAN Bd. 1995, Nr. 05, 30. Juni 1995 (1995-06-30) -& JP 07 040731 A (KAYABA IND CO LTD), 10. Februar 1995 (1995-02-10)
- PATENT ABSTRACTS OF JAPAN Bd. 1997, Nr. 10, 31. Oktober 1997 (1997-10-31) & JP 09 156338 A (KAYABA IND CO LTD), 17. Juni 1997 (1997-06-17)
- PATENT ABSTRACTS OF JAPAN Bd. 1997, Nr. 11, 28. November 1997 (1997-11-28) & JP 09 183306 A (KAYABA IND CO LTD), 15. Juli 1997 (1997-07-15)
- PATENT ABSTRACTS OF JAPAN Bd. 1997, Nr. 11, 28. November 1997 (1997-11-28) & JP 09 188120 A (KAYABA IND CO LTD), 22. Juli 1997 (1997-07-22)

## Beschreibung

Die Erfindung bezieht sich auf eine Anordnung zur aktiven Rollstabilisierung eines Kraftfahrzeugs.

Aus der DE 43 26 447 A1 ist eine Anordnung zur aktiven Rollstabilisierung bekannt, die für jeden Stabilisator einer Fahrzeugachse einen hydraulischen Aktuator in Form eines Drehzylinders mit mindestens zwei Arbeitskammern aufweist. Für die Erzeugung von der Rollneigung entgegenwirkenden Kräften werden die Arbeitskammern der Aktuatoren über ein hydraulisches Schaltventil gezielt mit Druck versorgt. Dabei dient das hydraulische Schaltventil dazu, einen vor dem Schaltventil erzeugten hydraulischen Druck wahlweise an einzelne der Arbeitskammern zu leiten, um so einer Rollneigung in unterschiedliche Richtungen entgegenzuwirken. Zur Einstellung des Druckniveaus und damit der in den Stabilisator einzubringenden Kräfte ist zwischen dem hydraulischen Schaltventil und der Druckversorgungseinrichtung eine Hydraulikschaltung mit Druckbegrenzerventilen eingekoppelt. Die Druckbegrenzerventile werden in Abhängigkeit von Betriebsparametern des Kraftfahrzeugs eingestellt. Eine Druckregelung über das Schaltventil ist dabei nicht vorgesehen.

Weiterhin ist eine ähnliche Anordnung aus der DE 43 37 7651 bekannt. Das dort offenbarte Zweikreishydrauliksystem verwendet ebenfalls ein hydraulisches Schaltventil, mit dem ein Arbeitsdruck wahlweise der einen oder anderen Arbeitskammer eines Aktuators zugeführt werden kann. Überdies ist eine Ventilstellung vorgesehen, in der beide Arbeitskammern von der Druckversorgung abgeschnitten sind. Eine Druckregelung ist über das hydraulische Schaltventil hingegen nicht möglich. Zur Einstellung des Druckniveaus ist dem hydraulischen Schaltventil vielmehr ein Druckregelkreis vorgeschaltet, der neben einem Stromregelventil einen Drucksensor sowie ein Proportionaldruckbegrenzungsventil aufweist. Die Regelung des Drucks erfolgt durch separate Regelkreise für die Vorder- und Hinterachse über die Ansteuerung der Proportionaldruckbegrenzungsventile.

Eine weitere Anordnung dieser Art ist beispielsweise aus der DE 43 22 044 A1 bekannt.

Überdies kann in Verbindung mit dem hydraulischen Schaltventil zusätzlich ein Sicherheitsventil vorgesehen werden, mit dem sich die Druckzufuhr zu den Arbeitskammern unabhängig von dem hydraulischen Schaltventil unterbrechen läßt. Derartige Anordnungen sind beispielsweise in der DE 198 46 394 A1 und der DE 296 19 567 U1 offenbart.

Alle vorstehend erläuterten Anordnungen benötigen eine Vielzahl von hydraulischen Einrichtungen, um einerseits eine gezielte Druckbeaufschlagung ausgewählter Arbeitskammern an den Aktuatoren zu ermöglichen und andererseits ein gewünschtes Druckniveau und damit die der Rolleneigung entgegenwirkende Kraft einzustellen. Insbesondere die Regelung des Druckniveaus ist dabei störungsempfindlich und erfordert zur Gewährleistung der Fahrsicherheit bisher eine aufwendige Zusatzsensorik und -elektronik.

Vor diesem Hintergrund liegt der Erfindung die Aufgabe zugrunde, die bekannten Anordnungen zur Rollstabilisierung eines Fahrzeugs zu vereinfachen.

Die Erfindung schlägt hierzu eine Anordnung gemäß Anspruch 1 vor.

Durch die Vereinigung der Funktionen eines Schalt- bzw. Wegeventils und eines Druckregelventils in dem vorstehend genannten Regelventil ergibt sich eine erhebliche konstruktive Vereinfachung für die Ansteuerung des bzw. der Aktuatoren.

Außerdem ist über die Rückführung des Arbeitsdrucks auf das Stellorgan eine Ausregelung äußerer Störungen ohne zusätzliche Sensorik und zugehörige Elektronik möglich. Über die Ansteuerung des Betätigungsorgans läßt sich neben der Auswahl der mit Arbeitsdruck zu beaufschlagenden Arbeitskammern gleichzeitig auch das gewünschte Druckniveau vorgeben. Der entsprechenden Stellbewegung des Stellorgans wirkt dabei der auf dieses zurückgeführte, an denen jeweiligen Arbeitskammern anliegende Arbeitsdruck entgegen, um Schwankungen auszugleichen.

Bevorzugt erfolgt dies ohne großen Aufwand durch eine interne Druckrückführung in dem Regelventil selbst. Dieses Regelventil bildet somit eine kompakte Einheit, die im Prinzip unmittelbar zwischen einer Druckversorgungseinrichtung und den Arbeitskammern der Aktuatoren einsetzbar ist.

Es ist jedoch auch möglich, ein solches Regelventil mit anderen Schalt-, Wege- oder Druckregelventilen oder auch mehrere solcher Regelventile miteinander zu kombinieren.

Vorzugsweise wird für jede Arbeitskammer eine Leitung vorgesehen, um den jeweils an eine Arbeitskammer angelegten Arbeitsdruck der Betätigung entgegenwirkend auf das Stellorgan zu übertragen. Bei der Versorgung einer größeren Anzahl von gleichwirkenden Arbeitskammern können die entsprechenden Druckausgänge des Regelventils auch mit einer gemeinsamen Leitung zur Rückführung des Druckes auf das Stellorgan verbunden sein.

Unter einem Aktuator im Sinne dieser Anmeldung wird jede Einrichtung verstanden, mit der infolge einer hydraulischen oder pneumatischen Druckbeaufschlagung eine Kraft in ein Fahrwerk eines Fahrzeugs eingeleitet werden kann. In Verbindung mit einem Drehstabilisator an einer Fahrzeugachse kann beispielsweise ein Drehaggregat mit zwei Drehzylindern wie in der DE 43 26 447 A1 erwähnt, oder eine Rotor-Stator-Anordnung wie in der DE 199 30 444 C2 beschrieben, verwendet werden.

In einer vorteilhaften Ausgestaltung der Erfindung ist ein Aktuator mit vier Arbeitskammern an einem Drehstabilisator vorgesehen, wobei durch die wahlweise Beaufschlagung der Arbeitskammern eine Drehverspannung in den Drehstabilisator einbringbar ist.

In einer weiteren Ausgestaltung der Erfindung werden die Kräfte zur Rollstabilisierung über Zylinder-Kolben-Anordnungen eingebracht. Vorzugsweise wird dafür je Fahrzeugrad einer Radachse ein Aktuator in Form einer Zylinder-Kolben-Anordnung mit mindestens einer Druckkammer vorgesehen.

Unabhängig von der Ausgestaltung der Aktuatoren weist das Regelventil bevorzugt mindestens folgende Anschlüsse auf:
■ einen Druckeingang, der mit einer Ausgangseite der Druckversorgungseinrichtung verbunden ist,
■ einen ersten Druckausgang, der zu einer ersten Arbeitskammer leitet,
■ einen dem ersten Druckausgang zugeordneten Rücklaufausgang,
■ einen zweiten Druckausgang, der zu einer zweiten Arbeitskammer leitet, und
■ einen dem zweiten Druckausgang zugeordneten Rücklaufausgang.

Das Stellorgan kann dann für jede Arbeitskammer eine Stellung einnehmen, in der der Druckeingang mit dem zugehörigen Druckausgang verbunden ist und das Stellorgan gegen den jeweils anderen Druckausgang und den Rücklaufausgang des erstgenannten Druckausgangs schließt. Weiterhin ist eine Stellung möglich, in der der Druckeingang innerhalb des Regelventils mit allen Rücklaufausgängen verbunden ist. In dieser weiteren Stellung wird der Volumenstrom der Druckversorgungseinrichtung innerhalb des Regelventils an den zu den Arbeitskammern leitenden Druckausgängen im wesentlichen vorbeigefördert, ohne daß es dabei zu einem merklichen Druckanstieg in den Arbeitskammern kommt.

Das Stellorgan ist als axial bewegbarer Ventilkolben ausgebildet. Zudem ist für jeden Druckausgang eine eigene Steuerkante vorgesehen. Besonders vorteilhaft ist in diesem Zusammenhang eine asymmetrische Anordnung der Steuerkanten, so daß im Betrieb lediglich eine Steuerkante aktiv den Druck regelt, während die verbleibenden Steuerkanten allein der Leitung des Volumenstromes dienen. Es ist folglich nicht erforderlich, daß zwei Steuerkanten des axial verschiebbaren Kolbens exakt gleichzeitig öffnen und schließen. Ein derartig aufgebautes Regelventil läßt sich kostengünstig herstellen, weil an die axiale Genauigkeit des Ventilkolbens und des zugehörigen Gehäuses bei Aufrechterhaltung der Funktion keine hohen Anforderungen gestellt werden brauchen.

Beispielsweise ist die Steuerkante für einen Druckausgang derart ausgebildet und angeordnet, um je nach Stellung des Stellorgans entweder den Druckeingang lediglich mit dem Druckausgang zu verbinden, oder den Druckeingang mit dem Druckausgang und dem zugehörigen Rücklaufausgang unter Drosselung des Volumenstroms zu dem Rücklaufausgang zu verbinden, oder aber den Druckeingang gegenüber dem Druckausgang abzusperren, wobei der Druckausgang mit dem zugehörigen Rücklaufausgang verbunden ist. Durch die Verwirklichung sämtlicher Funktionen zur Ansteuerung einer Arbeitskammer über eine einzige Steuerkante bleibt der Aufbau des Regelventils besonders einfach.

Werden über das Regelventil zwei in ihrer Funktion entgegengerichtete Arbeitskammern angesteuert, so ist es für einen einfachen Aufbau des Regelventils weiterhin vorteilhaft, wenn das Regelventil eine Zentralbohrung zur Aufnahme des Ventilkolbens aufweist und der Druckeingang zwischen den entsprechenden Druckausgängen mit der Zentralbohrung verbunden ist.

Zur Rückführung des an einer Arbeitskammer anliegenden Arbeitsdruckes auf das Stellorgan ist gemäß einer vorteilhaften Ausgestaltung der Erfindung innerhalb des Regelventils jedem Druckausgang eine Druckkammer zugeordnet, die u.a. durch eine in Axialrichtung weisende Kolbenfläche des Ventilkolbens begrenzt wird, wobei die Druckkammern über Leitungen mit den Druckausgängen derart verbunden sind, daß bei Anliegen eines Arbeitsdrucks an einer Arbeitskammer des bzw. der Aktuatoren der Ventilkolben entgegen seiner Betätigungsrichtung beaufschlagt wird.

Die Kolbenflächen können beispielsweise an den einander gegenüberliegenden Enden des Ventilkolbens vorgesehen sein. Denkbar ist auch eine Bauweise, bei der an dem Ventilkolben ein Bund ausgebildet ist, der an beiden Seiten mit jeweils einer Druckkammer kommuniziert. Ein an den Kolbenflächen anliegender Differenzdruck, der aus einer unterschiedlichen Druckbeaufschlagung der zugehörigen Arbeitskammern resultiert, bewirkt eine Rückstellkraft an dem Ventilkolben, die der Betätigungskraft des Betätigungsorgans entgegenwirkt. Über die Betätigungskraft des Betätigungsorgans werden folglich die an den Arbeitskammern anliegenden Arbeitsdrücke eingestellt. Störungen durch äußere Lasten werden durch das Regelventil eigenständig ausgeregelt.

Als Betätigungsorgan sind beispielsweise Magneteinrichtungen vorgesehen, um auf das Stellorgan bzw. den Ventilkörper eine einstellbare Magnetkraft auszuüben. Weiterhin ist in diesem Zusammenhang eine Steuereinrichtung vorgesehen, welche in Abhängigkeit erfaßter Fahrzeugparameter eine zur Rollstabilisierung erforderliche Magnetkraft-Vorgabe in Form von Stellsignalen für die Magneteinrichtungen erzeugt. Die Betätigungskraft kann selbstverständlich auch in anderer Art und Weise auf das Stellorgan bzw. den Ventilkörper aufgebracht werden. Mittels Magneteinrichtungen läßt sich jedoch eine sehr schnelle Stellsignalumsetzung sowie eine kompakte Bauweise realisieren.

Nachfolgend wird die Erfindung nun anhand eines Ausführungsbeispiels näher erläutert. Die Zeichnung zeigt in:
- Figur 1: ein Ausführungsbeispiel für eine Anordnung zur aktiven Rollstabilisierung eines Kraftfahrzeugs in schematischer Darstellung,
- Figur 2: eine Teilschnittansicht eines Regelventils der Anordnung aus Figur 1,
- Figur 3: eine schematische Teilschnittansicht des Regelventils in einer Neutralstellung,
- Figur 4: einen Schnitt durch einen Aktuator der Anordnung aus Figur 1 in der Neutralstellung,
- Figur 5: eine weitere schematische Teilschnittansicht des Regelventils in einer Stellung, in der ausgewählte Arbeitskammern des Aktuators mit einem Arbeitsdruck beaufschlagt sind, wobei die arbeitsdruckbelasteten Bereiche gekennzeichnet sind, und in
- Figur 6: einen Schnitt durch den Aktuator, wobei die arbeitsdruckbelasteten Bereiche gekennzeichnet sind.

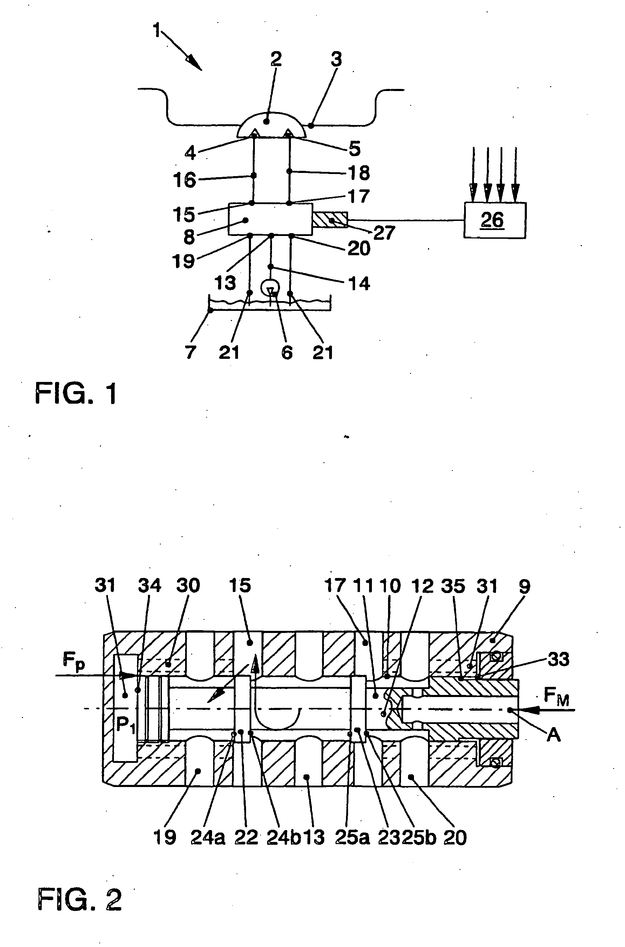

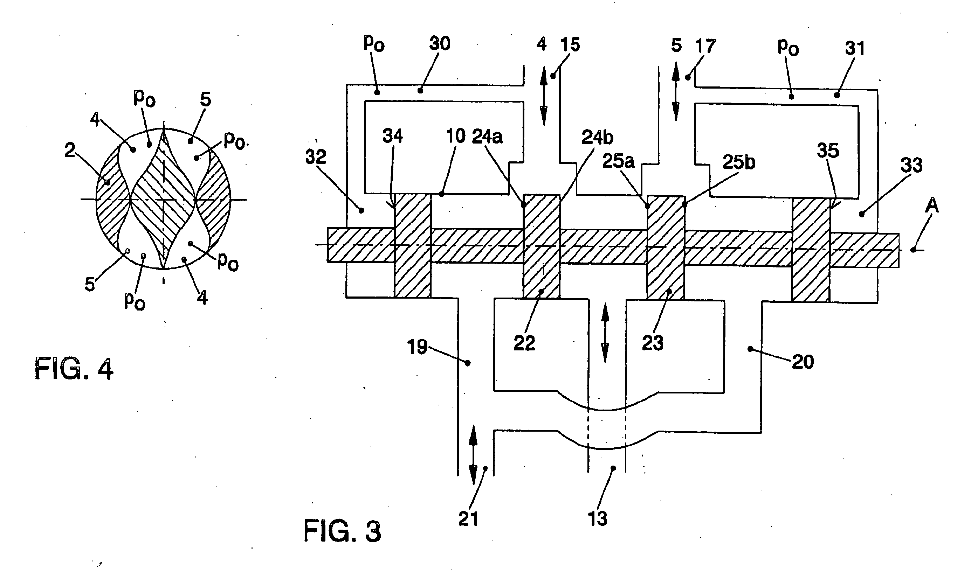

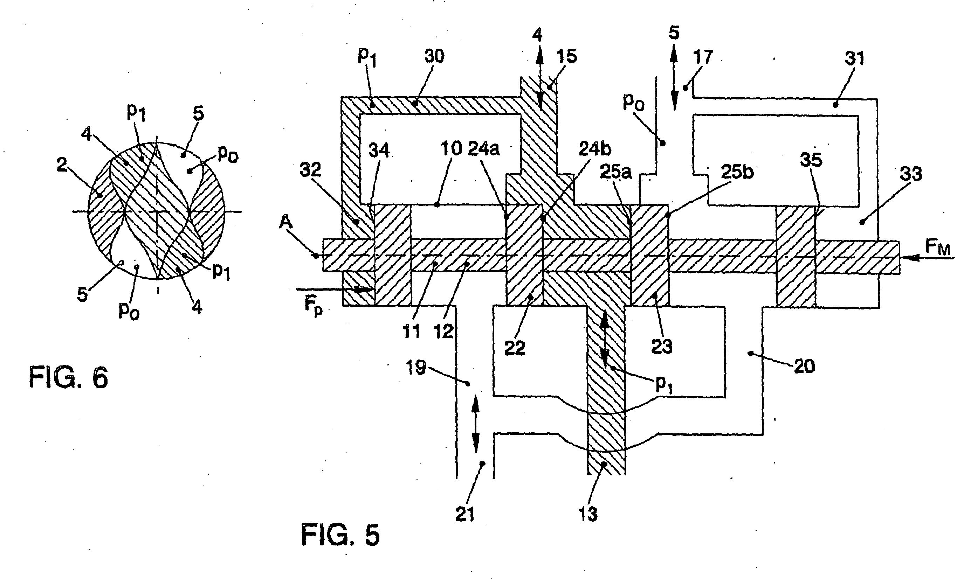

Das Ausführungsbeispiel zeigt in Figur 1 eine Anordnung 1 zur aktiven Rollstabilisierung eines Kraftfahrzeugs. Zur Einbringung von rollstabilisierenden Kräften bzw. Momenten in das Fahrwerk des Fahrzeugs ist ein hydraulischer Aktuator 2 vorgesehen, der hier als Dreh- bzw. Schwenkmotor ausgebildet und in einen an einer Fahrzeugachse befindlichen Drehstabilisator 3 eingebaut ist. Wie die Figuren 4 und 6 zeigen, weist der verwendete Aktuator 2 insgesamt vier Arbeitskammern auf, wovon jeweils zwei einander diagonal gegenüberliegende Arbeitskammern 4 bzw. 5 gleichwirkend sind, das heißt bei einer Druckbeaufschlagung eine Drehverspannung des Drehstabilisators 3 in die gleiche Drehrichtung bewirken. Je nach Beaufschlagung der Arbeitskammern 4 bzw. 5 wird der Stabilisator 3 in die eine oder in die andere Richtung verdreht. Durch eine gezielte Ansteuerung der Arbeitskammern 4 bzw. 5 kann so der Rollneigung des Fahrzeugs durch Verspannung des Stabilisators 3 entgegengewirktwerden.

Zur Druckbeaufschlagung der Arbeitskammern 4 bzw. 5 ist eine Druckversorgungseinrichtung 6 in Form einer Pumpe vorgesehen, die ein Druckmedium aus einem Reservoir bzw. Tank 7 fördert. Das Druckmedium ist hier eine Flüssigkeit. Es ist jedoch auch möglich, als Druckmedium ein Gas zu verwenden.

Zwischen der Druckversorgungseinrichtung 6 und den Arbeitskammern 4 und 5 ist ein Regelventil 8 angeordnet, das neben der wahlweisen Beaufschlagung der Arbeitskammer 4 bzw. 5 weiterhin auch eine Einstellung und Regelung des den Arbeitskammern 4 und 5 zugeführten Druckes ermöglicht. Über das Druckniveau läßt sich folglich das Ausmaß der der Rollneigung entgegenwirkenden Kräfte bzw. Momente einstellen.

Die Figuren 2, 3 und 5 zeigen beispielhaft den Aufbau des hier verwendeten hydraulischen Regelventils 8. Das Regelventil 8 besitzt ein Gehäuse 9 mit einer Zentralbohrung 10. In der Zentralbohrung 10 ist ein Stellorgan 11 in Form eines axial bewegbaren Ventilkolbens 12 aufgenommen. Der Ventilkolben 12 ist von einer Seite in das Gehäuse 9 und die Zentralbohrung 10 eingesteckt und durch eine Muffe abgedichtet. Über den Ventilkolben 12 bzw. an diesem vorgesehene und weiter unten in ihrer Funktion noch näher erläuterte Steuerkanten 24 und 25 lassen sich eine Vielzahl von Druckeingängen und -ausgängen öffnen und absperren, wobei auch Zwischenstellungen möglich und für die Funktion des Regelventils 8 wichtig sind.

In dem hier dargestellten Ausführungsbeispiel befinden sich die Druckeingänge und Druckausgänge an in dem Gehäuse 9 ausgebildeten Druckkammern. Diese Druckkammern sind in bezug auf die Bewegungsachse A des Stellorgans 11 nebeneinander angeordnet und jeweils mit der Zentralbohrung 10 verbunden. Der Volumenstrom des Druckmediums durch die zwischen den Druckkammern und der Zentralöffnung 10 gebildeten Überströmöffnungen wird durch den Ventilkolben 12 bzw. die an diesem ausgebildeten Steuerkanten beeinflußt.

Wie die Figuren 2, 3 und 5 zeigen, weist das Regelventil 8 einen zentralen Druckeingang 13 auf, der mit einer Ausgangseite der Druckversorgungseinrichtung 6 über eine Leitung 14 verbunden ist. Weiterhin ist an dem Regelventil 8 ein erster Druckausgang 15 vorgesehen, der über eine Leitung 16 zu den ersten Arbeitskammern 4 leitet. Ein zweiter Druckausgang 17 führt über eine weitere Leitung 18 zu den zweiten Arbeitskammern 5. Dabei liegt der zentrale Druckeingang 13 in bezug auf die Achse A zwischen dem ersten Druckausgang 15 und zweiten Druckausgang 17. Jedem Druckausgang 15 bzw. 17 ist ein Rücklaufausgang 19 bzw. 20 zugeordnet, über den zur Druckentlastung überschüssiges Druckmedium über weitere Leitungen 21 in den Tank 7 zurückfließen kann.

Zur Ansteuerung der Druckeingänge und -ausgänge 13, 15, 17, 19 und 20 bzw. der zugehörigen Überströmöffnungen weist der Ventilkolben 12 zwei Wellenbünde 22 und 23 auf, die mit ihrem Außenumfang in der Zentralbohrung 10 geführt sind und gegen diese abdichten. Gleichzeitig bilden die Wellenbünde 22 und 23 an ihrem Außenumfang Steuerkanten 24a und 24b bzw. 25a und 25b aus, die mit den Überströmöffnungen zusammenwirken.

Die Anordnung der Steuerkanten 24a, 24b, 25a und 25b sowie der Überströmöffnungen ist dabei so gewählt, daß in Abhängigkeit der Stellung des Ventilkolbens 12 eine wahlweise Druckversorgung der Arbeitskammern 4 und 5 möglich ist. Insbesondere kann der Ventilkolben 12 für jede der Arbeitskammern 4 und 5 eine Stellung einnehmen, in der der Druckeingang 13 mit einem Druckausgang verbunden ist, jedoch gegen den anderen Druckausgang und den Rücklaufausgang des erstgenannten Druckausgangs im wesentlichen schließt. Dieser Zustand ist in den Figuren 2 und 5 für die Druckbeaufschlagung der ersten Arbeitskammern 4 beispielhaft dargestellt. Der Ventilkolben 12 ist dazu aus einer in Figur 3 gezeigten Neutralstellung soweit nach links geschoben, daß der zugehörige Wellenbund 22 einen Volumenstrom von dem Druckeingang 13 zu dem ersten Druckausgang 15 freigibt. Gleichzeitig verengt der Wellenbund 22 den Strömungsweg von dem Druckeingang 13 über die Zentralbohrung 10 zu dem ersten Rücklaufausgang 19 oder dichtet diesen sogar ab. Diese hat zur Folge, daß an die ersten Arbeitskammern 4 ein Arbeitsdruck p₁ angelegt wird. In dieser Stellung sperrt überdies der zweite Wellenbund 23 den zweiten Druckausgang 17 gegenüber dem Druckeingang 13 ab oder verengt diesen zumindest merklich. Gleichzeitig bleibt der zugehörige zweite Rücklaufausgang 20 mit dem zweiten Druckausgang 17 verbunden. Damit kann in den zweiten Arbeitskammern 5 befindliches Druckmedium in den Tank 7 abströmen, das heißt die zweiten Arbeitskammern 5 setzen in dieser Stellung des Ventilkolbens 12 einer Verdrehung des Aktuators 2 bzw. Schwenkmotors keinen oder" allenfalls einen geringen Widerstand entgegen. Folglich wird in der in den Figuren 2 und 5 dargestellten Stellung des Stellorgans 11 in den Stabilisator 3 eine Drehverspannung eingebracht. Durch eine Umkehrung der Bewegung des Stellorgans 11 wird eine Umkehrung der Belastung der Arbeitskammern und der Verspannung des Stabilisators 3 erzielt.

Die Wellenbünde 22 und 23 sowie die zugehörigen Steuerkanten 24a, 24b, 25a und 25b sind in bezug auf die Druckeingänge und -ausgänge 15 und 17 asymmetrisch angeordnet. Bei einer Verschiebung des Ventilkolbens 12 aus der Neutralstellung (Figur 3) nach links in die in Figur 2 und 5 dargestellte Stellung schließt zuerst die Steuerkante 25a. Bei weiterer Verschiebung des Ventilkolbens 12 nach links bleibt die zugehörige Spaltöffnung geschlossen, während die Steuerkanten 24a und 24 b Spaltöffnungen verengt bzw. vergrößert.

Ist eine solche Verspannung des Stabilisators 3 nicht erwünscht, wie dies insbesondere bei ungestörter Geradeausfahrt der Fall ist, wird das Stellorgan 11 in die in Figur 3 gezeigte Neutralstellung geschaltet. Diese kann beispielsweise durch eine Federzentrierung des Ventilkolbens 12 definiert werden. In der Neutralstellung sind die Wellenbünde 22 und 23 gegenüber der ausgelenkten Stellung in Figur 2 leicht nach rechts verschoben, so daß der Volumenstrom durch den Druckeingang 13 die zugehörigen Steuerkanten 24a und 24b sowie 25a und 25b umströmt und unmittelbar zu den Rücklaufausgängen 18 und 19 gelangt. In dieser Stellung ist die Drosselwirkung um die Wellenbünde 22 und 23 gering. Ein Druckaufbau in den Arbeitskammern 4 bzw. 5 findet dabei nicht statt. Gegebenenfalls in den Arbeitskammern 4 bzw. 5 noch anliegende Arbeitsdrücke p₁ werden über die Rücklaufausgänge 19 und 20 abgebaut, so daß eine eventuell vorher mittels des Aktuators 2 in den Stabilisator 3 eingebrachte Drehverspannung aufgehoben wird.

Die Kompensation der Rollneigung des Fahrzeugs wird durch eine Steuereinrichtung 26 veranlaßt, die in Abhängigkeit erfaßter Fahrzeugparameter elektrische Stellsignale zur Betätigung des Stellorgans 11 erzeugt. Zur Umsetzung der Stellsignale ist an dem Regelventil 8 ein Betätigungsorgan 27 vorgesehen, das in dem hier dargestellten Ausführungsbeispiel mehrere Magneteinrichtungen umfaßt. Die Magneteinrichtungen sind beispielsweise an beiden Enden des Stellorgans 11 angeordnet und erzeugen unter einer Bestromung eine Kraft F_{M}, welche je nach Ansteuerung das Stellorgan 11 aus seiner Neutralstellung in die eine oder in die andere Richtung verschiebt, um einen wahlweisen Druckaufbau an den Arbeitskammern 4 bzw. 5 zu ermöglichen.

Wie vor allem Figur 2 zeigt, sind innerhalb des Regelventils 8 Leitungen 30 und 31 in Form von Steuerbohrungen vorgesehen. Die Leitungen 30 und 31 übertragen den infolge der Betätigung des Stellorgans 11 an eine Arbeitskammer 4 bzw. 5 angelegten Arbeitsdruck p₁ auf das Stellorgan 11. Die aus dem Druck p₁ resultierende Kraft wirkt dabei der Betätigung bzw. Verschiebung durch das Betätigungsorgan 27 entgegen.

Innerhalb des Regelventils 8 ist dazu jedem Druckausgang 15 bzw. 17 eine Druckkammer 32 bzw. 33 zugeordnet, die über die zugehörige Leitung 30 bzw. 31 mit dem jeweiligen Druckausgang 15 bzw. 17 verbunden ist. Die Druckkammern 32 bzw. 33 sind jeweils durch eine in Axialrichtung weisende Kolbenfläche 34 bzw. 35 des Ventilkolbens 12 begrenzt, auf die der Druck der jeweiligen Arbeitskammer 4 bzw. 5 einwirkt. Dies hat zur Folge, daß bei Anliegen eines Arbeitsdrucks p₁ an einer Arbeitskammer 4 bzw. 5 des Aktuators 2 der Ventilkolben 12 mit einer Kraft beaufschlagt wird, die der Betätigungsrichtung durch das Betätigungsorgan 27 entgegenwirkt.

In der in den Figuren 2 und 5 gezeigten Ventilstellung wirkt der an den ersten Arbeitskammern 4 anliegende Arbeitsdruck p₁ auf die Kolbenfläche 34 ein, wodurch eine der Betätigungskraft F_{M} entgegengerichtete Kraft Fp erzeugt wird, da an der gegenüberliegenden Kolbenfläche 35 der über den Rücklaufausgang 20 entlastete Druck p₀ der zweiten Arbeitskammern 5 anliegt. In Abhängigkeit der durch die durch Bestromung erzeugten Betätigungskraft F_{M} und der entgegengesetzt wirkenden Druckkraft Fₚ bewegt sich der Ventilkolben 12 so lange hin und her, bis sich ein Gleichgewicht zwischen dem Arbeitdruck p₁ in den ersten Arbeitskammern 4 und der Magnetkraft F_{M} einstellt. Dabei entspricht der Differenzdruck zwischen den Arbeitskammern 4 und 5 der Magnetkraftdifferenz, die durch den Steuerstrom, d. h. in Abhängigkeit der Vorgabe durch die Steuereinrichtung 26 eingestellt wird. Analog zu der in Figur 2 dargestellten Stellung kann durch eine umgekehrte Bestromung ein Arbeitsdruck p₁ an den zweiten Arbeitskammern 5 eingestellt werden. Störungen des Arbeitdrucks p₁ durch äußere Lasten werden durch das Regelventil 8 eigenständig ausgeregelt. Bei diesem Vorgang bewirken die Steuerkanten 24a, 24b, 25a und 25b eine Drosselung des Volumenstroms zu dem jeweiligen Rücklaufausgang 19 bzw. 20.

Das vorstehend erläuterte Ausführungsbeispiel bezieht sich auf eine Anordnung mit einem Drehstabilisator 3. Die Kräfte zur Verminderung des Rollens können jedoch auch in anderer Art und Weise in das Fahrwerk eines Kraftfahrzeugs eingebracht werden. So kann die in Figur 1 dargestellte Anordnung 1 und insbesondere das dort verwendete Regelventil 8 auch in Verbindung mit Zylinder-Kolben-Anordnungen verwendet werden, welche den Fahrzeugrädern einer Radachse als Aktuatoren zugeordnet sind.

Selbstverständlich ist es möglich, die vorstehend erläuterte Anordnung 1 sowohl für die Vorderachse als auch für die Hinterachse eines Kraftfahrzeugs einzusetzen. Die entsprechenden Stellorgane können in einem gemeinsamen Ventilgehäuse angeordnet werden. Überdies kann für alle Arbeitskammern die gleiche Druckversorgungseinrichtung 6 verwendet werden.

In sämtlichen Fällen ergibt sich durch die Vereinigung der Funktion eines Schaltventils und eines Druckregelventils ein einfacher Aufbau der Anordnung. Zudem lassen sich äußere Störungen ohne großen Aufwand ausregeln.

### BEZUGSZEICHENLISTE

- 1: Anordnung zur aktiven Rollstabilisierung eines Kraftfahrzeugs
- 2: Aktuatoren
- 3: Stabilisator
- 4: erste Arbeitskammer(n)
- 5: zweite Arbeitskammer(n)
- 6: Druckversorgungseinrichtung bzw. Pumpe
- 7: Tank
- 8: Regelventil
- 9: Ventilgehäuse
- 10: Zentralbohrung
- 11: Stellorgan
- 12: Ventilkolben
- 13: Druckeingang
- 14: Leitung
- 15: erster Druckausgang
- 16: Leitung
- 17: zweiter Druckausgang
- 18: Leitung
- 19: erster Rücklaufausgang
- 20: zweiter Rücklaufausgang
- 21: Leitung
- 22: erster Wellenbund
- 23: zweiter Wellenbund
- 24a,b: erste Steuerkanten
- 25a,b: zweite Steuerkanten
- 26: Steuereinrichtung
- 27: Betätigungsorgan
- 30: Leitung
- 31: Leitung
- 32: Druckkammer
- 33: Druckkammer
- 34: Kolbenfläche
- 35: Kolbenfläche
- A: Achse
- F_{M}: Magnetkraft
- Fp: Druckkraft
- P₀: Rücklaufleitungsdruck
- p₁: Arbeitsdruck

## Patentansprüche

1. Anordnung zur aktiven Rollstabilisierung eines Kraftfahrzeugs, umfassend:
- mindestens einen hydraulischen oder pneumatischen Aktuator (2) mit insgesamt mindestens zwei Arbeitskammern (4, 5) zum Einbringen rollstabilisierender Kräfte in das Fahrwerk des Kraftfahrzeugs in Abhängigkeit der Druckbeaufschlagung der Arbeitskammern (4, 5),
- eine Druckversorgungseinrichtung (6) zur Versorgung der Arbeitskammern (4, 5), und
- ein Regelventil (8), das hydraulisch oder pneumatisch zwischen der Druckversorgungseinrichtung (6) und dem bzw. den Aktuatoren (2) angeordnet ist,
- wobei das Regelventil (8) einen Druckeingang (13), zwei Druckausgänge (15, 17) und zwei Rücklaufausgänge (19, 20), ein Stellorgan (11) in Form eines Ventilkolbens (12) zur Beeinflussung der Druckversorgung der Arbeitskammern (4, 5) in Abhängigkeit seiner Stellung sowie ein Betätigungsorgan (27) zur Beeinflussung der Stellung des Stellorgans (11) aufweist, wobei jedem Druckausgang (15, 17) ein Rücklaufausgang (19, 20) zugeordnet ist und der Druckeingang (13) zwischen den Druckausgang (15, 17) liegt,
und
- mindestens eine Leitung (30, 31) vorgesehen ist, die den infolge der Betätigung des Stellorgans (11) an eine Arbeitskammer (4, 5) angelegten Arbeitsdruck (p₁) der Betätigung entgegenwirkend auf das Stellorgan (11) überträgt, und
- wobei zur Ansteuerung von den Druckeingängen und -ausgängen (13, 15, 17, 19 und 20) zugehörigen Überströmöffnungen der Ventilkolben (12) zwei Wellenbünde (22, 23) aufweist, die mit ihrem Außenumfang in einer Zentralbohrung (10) des Regelventils (8) geführt sind und gegen diese abdichten, wobei die Wellenbünde (22, 23) an ihrem Außenumfang jeweils zwei Steuerkanten (24a, 24b, 25a, 25b) ausbilden, die mit den Überströmöffnungen zusammenwirken, und in einer Neutralstellung ein Volumenstrom durch den Druckeingang 13 die Steuerkanten (24a und 24b sowie 25a und 25b) der Wellenbünde (22, 23) umströmt und unmittelbar zu den Rücklaufausgängen (19, 20) gelangt.

2. Anordnung nach Anspruch 1, **dadurch gekennzeichnet, daß** für jede Arbeitskammer (4, 5) eine Leitung (30, 31) vorgesehen ist, um den jeweils an eine Arbeitskammer (4, 5) angelegten Arbeitsdruck (p₁) der Betätigung entgegenwirkend auf das Stellorgan (11) zu übertragen.

3. Anordnung nach Anspruch 1 oder 2, **dadurch gekennzeichnet, daß** das Regelventil (8) mindestens folgende Anschlüsse aufweist:
- einen Druckeingang (13), der mit einer Ausgangseite der Druckversorgungseinrichtung (6)verbunden ist,
- einen ersten Druckausgang (15), der zu einer ersten Arbeitskammer (4) leitet,
- einen dem ersten Druckausgang (15) zugeordneten Rücklaufausgang (19),
- einen zweiten Druckausgang (17), der zu einer zweiten Arbeitskammer (5) leitet,
- einen dem zweiten Druckausgang (17) zugeordneten Rücklaufausgang (20),
wobei das Stellorgan (11) für jede Arbeitskammer (4, 5) eine Stellung aufweist, in der der Druckeingang (13) mit dem zugehörigen Druckausgang (15, 17) verbunden ist und das Stellorgan (11) gegen den jeweils anderen Druckausgang (17, 15) und den Rücklaufausgang (19, 20) des erstgenannten Druckausgangs (15, 17) schließt oder wenigstens verengt, sowie
eine weitere Stellung, in der der Druckeingang (13) innerhalb des Regelventils (8) mit allen Rücklaufausgängen (19, 20) verbunden ist.

4. Anordnung nach einem der Ansprüche 1 bis 3, **dadurch gekennzeichnet, daß** das Stellorgan (11) als axial bewegbarer Ventilkolben (12) ausgebildet ist und für jeden Druckausgang (15, 17) mindestens eine eigene Steuerkante (24a, 24b, 25a, 25b) vorgesehen ist.

5. Anordnung nach Anspruch 4, **dadurch gekennzeichnet, daß** die Steuerkanten (24a, 24b, 25a, 25b) für einen Druckausgang (15, 17) derart ausgebildet und angeordnet sind, um je nach Stellung des Stellorgans (11) entweder den Druckeingang (13) lediglich mit dem Druckausgang (15, 17) zu verbinden, oder den Druckeingang (13) mit dem Druckausgang (15, 17) und dem zugehörigen Rücklaufausgang (19, 20) unter Drosselung des Volumenstroms zu dem Rücklaufausgang (19, 20) zu verbinden, oder aber den Druckeingang (13) gegenüber dem Druckausgang (15, 17) maximal zu drosseln oder ganz abzusperren, wobei der Druckausgang (15, 17) mit dem zugehörigen Rücklaufausgang (19, 20) verbunden ist.

6. Anordnung nach Anspruch 4 oder 5, **dadurch gekennzeichnet, daß** innerhalb des Regelventils (8) jedem Druckausgang (15, 17) eine Druckkammer (32, 33) zugeordnet ist, die durch eine in Axialrichtung weisende Kolbenfläche (34, 35) des Ventilkolbens (12) begrenzt wird, wobei die Druckkammer (32, 33) über Leitungen (30, 31) mit den Druckausgängen (15, 17) derart verbunden sind, daß bei Anliegen eines Arbeitsdrucks (p₁) an einer Arbeitskammer (4, 5) des bzw. der Aktuatoren (2) der Ventilkolben (11) entgegen seiner Betätigungsrichtung beaufschlagt wird.

7. Anordnung nach einem der Ansprüche 4 bis 6, **dadurch gekennzeichnet, daß** das Regelventil (8) eine Zentralbohrung (10) zur Aufnahme des Ventilkolbens (12) aufweist und der Druckeingang (13) zwischen den Druckausgängen (15, 17) mit der Zentralbohrung (10) verbunden ist.

8. Anordnung nach einem der Ansprüche 1 bis 7, **dadurch gekennzeichnet, daß** als Betätigungsorgan (27) Magneteinrichtungen vorgesehen sind, um auf das Stellorgan (11) bzw. den Ventilkörper (12) eine einstellbare Magnetkraft auszuüben, und daß eine Steuereinrichtung (26) vorgesehen ist, welche in Abhängigkeit erfaßter Fahrzeugparameter eine zur Rollstabilisierung erforderliche Magnetkraft-Vorgabe in Form von Stellsignalen für die Magneteinrichtungen erzeugt.

9. Anordnung nach einem der Ansprüche 1 bis 8, **dadurch gekennzeichnet, daß** der Aktuator (2) an einem Drehstabilisator (3) vorgesehen ist und vier Arbeitskammern (4, 5) aufweist, durch deren Beaufschlagung eine Drehverspannung in den Drehstabilisator (3) einbringbar ist.

10. Anordnung nach einem der Ansprüche 1 bis 9, **dadurch gekennzeichnet, daß** je Fahrzeugachse mindestens ein Aktuator (2), vorzugsweise je Fahrzeugrad einer Radachse ein Aktuator (2) in Form einer Zylinder-Kolben-Anordnung mit mindestens einer Druckkammer vorgesehen ist.

## Claims

1. Assembly for active roll stabilization of a motor vehicle, comprising:
- at least one hydraulic or pneumatic actuator (2) with in total at least two working chambers (4, 5) for introducing roll-stabilizing forces into the chassis of the motor vehicle as a function of the pressurization of the working chambers (4, 5),
- a pressure supply device (6) for supplying the working chambers (4, 5), and
- a control valve (8) which is arranged hydraulically or pneumatically between the pressure supply device (6) and the actuator or actuators (2),
- the control valve (8) having a pressure input (13), two pressure outputs (15, 17) and two return outputs (19, 20), an adjusting member (11) in the form of a valve piston (12) for influencing the pressure supply of the working chambers (4, 5) as a function of its position and an actuating member (27) for influencing the position of the adjusting member (11), a return output (19, 20) being assigned to each pressure output (15, 17), and the pressure input (13) lying between the pressure outputs (15, 17),
and
- at least one line (30, 31) is provided which transmits the working pressure (p₁) applied to a working chamber (4, 5) as a consequence of the actuation of the adjusting member (11) to the adjusting member (11) in a manner opposing the actuation, and
- in order to drive overflow openings associated with the pressure inputs and outputs (13, 15, 17, 19 and 20), the valve piston (12) having two shaft collars (22, 23) which are guided with their external periphery in a central bore (10) of the control valve (8) and seal against these, the shaft collars (22, 23) forming at their external periphery in each case two control edges (24a, 24b, 25a, 25b) which interact with the overflow openings, and in a neutral position, a volumetric flow through the pressure input (13) flowing around the control edges (24a and 24b and also 25a and 25b) of the shaft collars (22, 23) and passing directly to the return outputs (19, 20).

2. Assembly according to Claim 1, **characterized in that** a line (30, 31) is provided for each working chamber (4, 5) in order to transmit the working pressure (p₁) applied in each case to one working chamber (4, 5) to the adjusting member (11) in a manner opposing the actuation.

3. Assembly according to Claim 1 or 2, **characterized in that** the control valve (8) has at least the following connections:
- a pressure input (13) which is connected to an output side of the pressure supply device (6),
- a first pressure output (15) leading to a first working chamber (4),
- a return output (19) assigned to the first pressure output (15),
- a second pressure output (17) leading to a second working chamber (5),
- a return output (20) assigned to the second pressure output (17),
the adjusting member (11) having a position for each working chamber (4, 5) in which the pressure input (13) is connected to the associated pressure output (15, 17) and closes or at least constricts the adjusting member (11) with respect to the respective other pressure output (17, 15) and the return output (19, 20) of the first-mentioned pressure output (15, 17), and a further position in which the pressure input (13) is connected within the control valve (8) to all of the return outputs (19, 20).

4. Assembly according to one of Claims 1 to 3, **characterized in that** the adjusting member (11) is designed as an axially movable valve piston (12) and at least one dedicated control edge (24a, 24b, 25a, 25b) is provided for each pressure output (15, 17).

5. Assembly according to Claim 4, **characterized in that** the control edges (24a, 24b, 25a, 25b) for a pressure output (15, 17) are designed and arranged, in order depending on the position of the adjusting member (11), either to connect the pressure input (13) only to the pressure output (15, 17) or to connect the pressure input (13) to the pressure output (15, 17) and the associated return output (19, 20) with the volumetric flow to the return output (19, 20) being throttled, or else to throttle the pressure input (13) to the maximum or completely block it off with respect to the pressure output (15, 17), in which case the pressure output (15, 17) is connected to the associated return output (19, 20).

6. Assembly according to Claim 4 or 5, **characterized in that**, within the control valve (8), each pressure output (15, 17) is assigned a pressure chamber (32, 33) which is bounded by a piston surface (34, 35) of the valve piston (12), which piston surface faces in the axial direction, the pressure chambers (32, 33) being connected to the pressure outputs (15, 17) via lines (30, 31) in such a manner that, when a working pressure (p₁) is applied to a working chamber (4, 5) of the actuator or of the actuators (2), the valve piston (11) is acted upon counter to its actuating direction.

7. Assembly according to one of Claims 4 to 6, **characterized in that** the control valve (8) has a central bore (10) for receiving the valve piston (12) and the pressure input (13) is connected between the pressure outputs (15, 17) to the central bore (10).

8. Assembly according to one of Claims 1 to 7, **characterized in that** magnet devices are provided as the actuating member (27) in order to exert an adjustable magnetic force on the adjusting member (11) or the valve body (12), and **in that** a control device (26) is provided which, as a function of the detected vehicle parameters, produces a stipulation of the magnetic force required for roll stabilization in the form of adjusting signals for the magnet devices.

9. Assembly according to one of Claims 1 to 8, **characterized in that** the actuator (2) is provided on a torsion stabilizer (3) and has four working chambers (4, 5) by means of the actuation of which a torsional deformation can be introduced into the torsion stabilizer (3).

10. Assembly according to one of Claims 1 to 9, **characterized in that** at least one actuator (2) is provided per vehicle axle, preferably an actuator (2) in the form of a cylinder/piston assembly with at least one pressure chamber is provided per vehicle wheel of a wheel axle.

## Revendications

1. Ensemble pour la stabilisation active de roulis d'un véhicule automobile, comprenant :
- au moins un actionneur hydraulique ou pneumatique (2) avec au total au moins deux chambres de travail (4, 5) pour exercer des forces stabilisant le roulis dans le châssis du véhicule automobile en fonction de la sollicitation en pression des chambres de travail (4, 5),
- un dispositif d'alimentation en pression (6) pour alimenter les chambres de travail (4, 5) et
- une soupape de régulation (8) qui est disposée hydrauliquement ou pneumatiquement entre le dispositif d'alimentation en pression (6) et le ou les actionneurs (2),
- la soupape de régulation (8) présentant une entrée de pression (13), deux sorties de pression (15, 17) et deux sorties de retour (19, 20), un organe de commande (11) sous forme de piston de soupape (12) pour influencer l'alimentation en pression des chambres de travail (4, 5) en fonction de sa position ainsi qu'un organe d'actionnement (27) pour influencer la position de l'organe de commande (11), une sortie de retour (19, 20) étant associée à chaque sortie de pression (15, 17), et l'entrée de pression (13) se situant entre les sorties de pression (15, 17),
et
- au moins une conduite (30 ,31) étant prévue, laquelle transmet à l'organe de commande (11) la pression de travail (p₁) appliquée à une chambre de travail (4, 5), suite à l'actionnement de l'organe de commande (11), en s'opposant à l'actionnement, et
- pour la commande d'ouvertures de débordement associées aux entrées et aux sorties de pression (13, 15, 17, 19 et 20), le piston de soupape (12) présentant deux épaulements d'arbre (22, 23), qui sont guidés avec leur pourtour extérieur dans un alésage central (10) de la soupape de régulation (8) et qui réalisent l'étanchéité vis-à-vis de celui-ci, les épaulements d'arbre (22 ,23) constituant au niveau de leur pourtour extérieur à chaque fois deux arêtes de commande (24a, 24b, 25a, 25b), qui coopèrent avec les ouvertures de débordement, et dans une position neutre, un courant volumique circulant à travers l'entrée de pression (13) autour des arêtes de commande (24a et 24b ainsi que 25a et 25b) des épaulements d'arbre (22, 23), et parvenant directement aux sorties de retour (19, 20).

2. Ensemble selon la revendication 1, **caractérisé en ce que** pour chaque chambre de travail (4, 5), on prévoit une conduite (30, 31) afin de transmettre à l'organe de commande (11) la pression de travail (p₁) appliquée à chaque fois à une chambre de travail (4, 5) en s'opposant à l'actionnement.

3. Ensemble selon la revendication 1 ou 2, **caractérisé en ce que** la soupape de régulation (8) présente au moins les raccords suivants :
- une entrée de pression (13) qui est connectée à un côté de sortie du dispositif d'alimentation en pression (6),
- une première sortie de pression (15) qui conduit à une première chambre de travail (4),
- une sortie de retour (19) associée à la première sortie de pression (15),
- une deuxième sortie de pression (17) qui conduit à une deuxième chambre de travail (5),
- une sortie de retour (20) associée à la deuxième sortie de pression (17),
l'organe de commande (11) présentant pour chaque chambre de travail (4, 5) une position dans laquelle l'entrée de pression (13) est connectée à la sortie de pression associée (15, 17) et l'organe de commande (11) ferme ou au moins réduit, en s'appuyant contre elle, l'autre sortie de pression respective (17, 15) et la sortie de retour (19, 20) de la première sortie de pression mentionnée (15, 17), ainsi
qu'une autre position, dans laquelle l'entrée de pression (13) à l'intérieur de la soupape de régulation (8) est connectée à toutes les sorties de retour (19, 20).

4. Ensemble selon l'une quelconque des revendications 1 à 3, **caractérisé en ce que** l'organe de commande (11) est réalisé sous forme de piston de soupape déplaçable axialement (12) et au moins une arête de commande propre (24a, 24b, 25a, 25b) est prévue pour chaque sortie de pression (15, 17).

5. Ensemble selon la revendication 4, **caractérisé en ce que** les arêtes de commande (24a, 24b, 25a, 25b) pour une sortie de pression (15, 17) sont réalisées et disposées de manière à relier en fonction de la position de l'organe de commande (11) soit l'entrée de pression (13) uniquement à la sortie de pression (15, 17), soit l'entrée de pression (13) à la sortie de pression (15, 17) et à la sortie de retour associée (19, 20) avec étranglement du courant volumique vers la sortie de retour (19, 20), ou bien à étrangler au maximum voire de bloquer l'entrée de pression (13) par rapport à la sortie de pression (15, 17), la sortie de pression (15, 17) étant connectée à la sortie de retour associée (19, 20).

6. Ensemble selon la revendication 4 ou 5, **caractérisé en ce qu'**à l'intérieur de la soupape de régulation (8), on associe à chaque sortie de pression (15, 17) une chambre de pression (32, 33) qui est limitée par une surface de piston (34, 35) du piston de soupape (12) tournée dans la direction axiale, les chambres de pression (32, 33) étant connectées par le biais de conduites (30, 31) aux sorties de pression (15, 17) de telle sorte que lors de l'application d'une pression de travail (pᵢ) à une chambre de travail (4, 5) de l'actionneur (2) ou des actionneurs, le piston de soupape (11) soit sollicité à l'encontre de sa direction d'actionnement.

7. Ensemble selon l'une quelconque des revendications 4 à 6, **caractérisé en ce que** la soupape de régulation (8) présente un alésage central (10) pour recevoir le piston de soupape (12) et l'entrée de pression (13) entre les sorties de pression (15, 17) est connectée à l'alésage central (10).

8. Ensemble selon l'une quelconque des revendications 1 à 7, **caractérisé en ce que** l'on prévoit comme organe d'actionnement (27) des dispositifs magnétiques afin d'exercer sur l'organe de commande (11) ou le corps de soupape (12) une force magnétique ajustable, et **en ce que** l'on prévoit un dispositif de commande (26) qui produit en fonction de paramètres détectés du véhicule une valeur de force magnétique prédéfinie nécessaire pour effectuer la stabilisation de roulis sous forme de signaux de commande pour les dispositifs magnétiques.

9. Ensemble selon l'une quelconque des revendications 1 à 8, **caractérisé en ce que** l'actionneur (2) est prévu sur un stabilisateur rotatif (3) et présente quatre chambres de travail (4, 5) dont la sollicitation peut exercer une contrainte de rotation dans le stabilisateur rotatif (3).

10. Ensemble selon l'une quelconque des revendications 1 à 9, **caractérisé en ce que** chaque essieu du véhicule comprend au moins un actionneur (2), de préférence un actionneur (2) pour chaque roue du véhicule d'un essieu de roue sous forme d'ensemble cylindre-piston avec au moins une chambre de pression.
